# EUROPÄISCHE PATENTSCHRIFT

(11) **EP 3 694 955 B1**
(45) Veröffentlichungstag und Bekanntmachung des Hinweises auf die Patenterteilung: **03.03.2021**
(21) Anmeldenummer: 18833413.0
(22) Anmeldetag: 19.12.2018
(51) Int. Cl.: C09K 17/12, C04B 28/26, E02D 3/12, C04B 111/00, C04B 111/70

(54) **VERFAHREN ZUR HERSTELLUNG EINER ABDICHTUNG IN EINEM BODENMATERIAL DURCH INJEKTION UNTER EINSATZ VON KOHLENDIOXID**
METHOD FOR PRODUCING A SEAL IN A GROUND MATERIAL BY INJECTION USING CARBON DIOXIDE
PROCÉDÉ DE PRODUCTION D'UN SCELLEMENT DANS UN MATÉRIAU DE SOL PAR INJECTION EN UTILISANT DU DIOXYDE DE CARBONE

(30) Priorität: 20.12.2017 DE 102017130689
(43) Veröffentlichungstag der Anmeldung: 19.08.2020
(73) Patentinhaber: Wöllner GmbH, 67065 Ludwigshafen (DE)
(72) Erfinder: WEISS, Matthias, 67065 Ludwigshafen am Rhein/Rheingönheim (DE); LIND, Jörg, 67067 Ludwigshafen (DE); HENSEL, Peter, 67098 Bad Dürkheim (DE)
(74) Vertreter: Geskes, Christoph
(86) Internationale Anmeldenummer: PCT/EP2018/085776
(87) Internationale Veröffentlichungsnummer: WO 2019/121873

(56) Entgegenhaltungen:
- WO-A1-00/17126
- GB-A- 2 063 337
- PL-B1- 227 191
- US-A- 4 786 212

## Beschreibung

Die vorliegende Erfindung betrifft ein Verfahren zur Herstellung einer Abdichtung in einem Bodenmaterial durch Injektion von Kohlendioxid als auch die Verwendung von Kohlendioxid dafür.

Baugrund, gleich ob für industrielle Bebauung, Wohnbebauung, Ingenieurbau oder für Infrastrukturen, ist ein wertvolles Gut. Gleichwohl sollen Bauvorhaben gleich welcher Art auch an Stellen verwirklicht werden, an welchen eigentlich kein für eine Bebauung tauglicher Baugrund vorliegt. In diesem Fall müssen Baugrundverbesserungen vorgenommen werden. Insbesondere bei Errichtung von Baugruben unterhalb des Grundwasserspiegels treten dabei Probleme auf. Eine solche Baugrube muss dann über eine Abdichtung mit einer Dichtsohle abgedichtet werden, üblicherweise in Injektionsverfahren. Diese Dichtsohle bildet innerhalb einer Baugrube eine im Wesentlichen horizontal verlaufende Sperre, die das Eindringen von Grundwasser vermeidet. Baugruben weisen oftmals eine vertikal verlaufende Baugrubenumschließung auf, insbesondere in dem Fall, in welchem der Grundwasserspiegel höher liegt als eine vorgesehene Baugrubenbasis, die auch als Baugrubensohle bezeichnet wird. Aber auch zur Sicherung von Altlasten und Deponien sind Abdichtungen notwendig, sei es ebenfalls in Form von Dichtsohlen, oder aber weitergehend von Abkapselungen, so dass man bei einer Vollabkapselung auch von einer Abdichtung in Kuchenform sprechen kann. Grundsätzlich umfasst der Begriff Abdichtung im Sinne der vorliegenden Erfindung jegliche Arten von Abdichtungen in einem Bodenmaterial mindestens von einer Seite her (zum Beispiel in Form einer Dichtsohle, insbesondere zum Grundwasserschutz, beispielsweise bei einer Deponie, oder zur Verhinderung des Eindringens von Grundwasser, beispielsweise in einer Baugrube), aber auch von zwei, drei oder mehr Seiten, auch in abgeschlossener Form (Teil- oder Vollabkapselung) in beide Richtungen, je nach Anwendungsfall). Die vorliegende Erfindung betrifft nicht Bodenverfestigungen, bei denen wasserglashaltige oder kieselsolhaltige Lösungen in Bodenmaterial eingegeben, beispielsweise eingedüst, werden zur Verfestigung des Bodenmaterials. Bei derartigen Bodenverfestigungsverfahren werden sogenannte Hartgele erzeugt, um eine ausreichende Verfestigung des Bodenmaterials zu erhalten, um dieses den notwendigen und/oder gewünschten Belastungen aussetzen zu können.

Verfahren zur Herstellung einer horizontal verlaufenden Dichtsohle in Bodenmaterial sind vielfältig bekannt. Beispielsweise kann Zement in einem Injektionsverfahren in Bodenmaterial in einem Bodenbereich unterhalb der Sohle einer Baugrube eingebracht werden. Alternativ zu Zement sind auch Injektionsverfahren bekannt, bei denen ein wassersperrendes Gel, insbesondere ein Weichgel, ausgebildet wird. Solche Verfahren können beispielsweise aus Lösungen auf Basis von Wasserglas oder aber von Kieselsolen hergestellt werden. Dabei kann vor der Injektion mit Wasserglas oder Kieselsol eine Zementinjektion vorgenommen werden, um ein Aufschwimmen der Gelsohle, die üblicherweise als Weichgelsohle bezeichnet wird, zusammen mit Bodenmaterial zu vermeiden. Bei Zementinjektionen ist besonders nachteilig, dass stark alkalisches, ätzendes Calciumhydroxid gebildet wird, wodurch zudem die Gefahr der Erhöhung des pH-Wertes des Grundwassers besteht. Im Unterschied zu den vorgenannten Bodenverfestigungen werden bei Einsatz von Wassergläsern bei Herstellung einer Weichgelsohle solche eingesetzt, die einen niedrigen Feststoffgehalt, insbesondere einen niedrigen Siliziumdioxidgehalt, aufweisen. Der Siliziumdioxidgehalt in Zusammensetzungen zur Herstellung von Hartgelen liegt üblicherweise bei etwa 15 Gew.-% oder mehr, bezogen auf die Gesamtmenge der zur Hartgelbildung eingesetzten, in der Regel wässrigen Zusammensetzung, bei Zusammensetzungen zur Herstellung von Weichgelen bei etwa 10 Gew.-% oder niedriger, ebenfalls bezogen auf die Gesamtmenge der zur Herstellung von Weichgelen eingesetzten, in der Regel wässrigen Zusammensetzung.

Eine Abdichtung mittels einer Dichtsohle auf Wasserglasbasis erfolgt üblicherweise mit gelöstem Natriumaluminat, welche die eigentliche Gelbildung im Wasserglas initiiert. Daher wird eine solche Natriumaluminatlösung allgemein als Reaktiv, auch Härter genannt, angesprochen. Jedoch ist der pH-Wert einer Lösung aus Wasserglas und Natriumaluminat stark alkalisch und sehr viel höher als ein üblicher pH-Wert des Grundwassers. Zudem wird vermehrt insbesondere von Behörden gefordert, dass nur noch geringe Mengen an Aluminium in das Grundwasser gelangt dürfen. Aus den vorgenannten Gründen werden entsprechende Bauvorhaben in einigen Regionen in Deutschland, in welchen eine Dichtsohle auf Wasserglasbasis unter Einsatz einer Natriumaluminatlösung als Reaktiv oder aber auf Basis von Zement vorgesehen ist, unter Umständen zum Schutz des Grundwassers vorsorglich nicht mehr genehmigt.

Um diese Probleme zu umgehen, schlägt die DE 198 58 004 A1 vor, ein nicht alkalisches, gelbildendes Gemisch zum Abdichten und Verfestigen von Böden gegen Durchfluss von Wasser in Bau- und Tiefbauobjekten, zur Abdichtung von in den Boden eingebauten Ingenieursobjekten sowie zur Abkapselung von Altlasten und Deponien vorzusehen, welches aus Wasserglas, Wasser, saurem Reaktiv, anionischem Polyelektrolyt und Zusatzstoffen besteht. Dabei werden pH-Werte vorzugsweise in einem Bereich von 2 bis 4 eingestellt. Als saures Reaktiv wird konzentrierte Schwefelsäure eingesetzt. Nachteilig an diesem Verfahren ist allerdings insbesondere, dass gerade bei übersäuerten Böden durch den Eintrag einer derart sauren Lösung die Übersäuerung noch verstärkt wird, so dass dieses Verfahren durchaus noch mehr Nachteile in Hinblick auf den Schutz des Grundwassers und der Umwelt mit sich bringen dürfte als die bekannten Verfahren unter Einsatz einer Natriumaluminatlösung als Reaktiv.

Die DE 102 18 771 A1 schlägt ein Verfahren zur Bildung einer Dichtsohle in Form eines Weichgels unter Einsatz nicht von Wasserglas, sondern von Kieselsol vor. Dabei werden als Reaktiv verschiedene Metallsalze eingesetzt. Der pH-Wert der eingesetzten, gelbildenden Mischung soll in einem Bereich zwischen 7 und 9 liegen. Nachteilig an dem Einsatz einer solchen, auf Kieselsol basierenden Mischung als Injektionsmedium ist jedoch, dass Metallsalze mit der Zeit ausgewaschen werden und ins Grundwasser übergehen, wie dies auch bei dem Einsatz einer Natriumaluminatlösung zur Härtung eines Wasserglases der Fall ist. Zudem ist das dort eingesetzte Kieselsol ein teurer Ausgangsstoff, da dieses üblicherweise zunächst über einen Ionenaustauscher hergestellt werden muss, weshalb das dort vorgeschlagene Verfahren nicht wirtschaftlich sein dürfte.

GB 2 063 337 A offenbart ein Verfahren zur Injektion von Wasserglas unter Druck unter Verwendung von gasförmigen Kohlendioxid als alleinigem Reaktiv.

Es ist daher Aufgabe der vorliegenden Erfindung, ein Verfahren zur Herstellung einer Abdichtung zur Verfügung zu stellen, welches die aus dem Stand der Technik bekannten Nachteile nicht aufweist. Dabei steht insbesondere der Schutz des Grundwassers im Vordergrund.

Diese Aufgabe wird erfindungsgemäß gelöst durch ein Verfahren zur Herstellung einer Abdichtung in einem Bodenmaterial über eine Injektionsvorrichtung, wobei gasförmiges Kohlendioxid und eine wässrige Wasserglas-haltige Lösung mit mindestens einem Reaktiv, ausgewählt aus einer Gruppe umfassend Methylester, Ethylester und/oder Propylester der Adipinsäure, Apfelsäure, Ascorbinsäure, Zitronensäure, Essigsäure, Oxalsäure, Weinsäure sowie von Dicarbonsäuren, als auch Carbonsäureester mit Kohlenstoffketten mit 1 bis 4 Kohlenstoffatomen und Dicarbonsäureester mit Kohlenstoffketten mit 1 bis 6 Kohlenstoffatomen, Triglyceride, cyclische Carbonsäureester, Propylencarbonat, Triacetin oder dibasische Ester, zu einer Reaktion unter Bildung eines Gels, insbesondere eines Weichgels, gebracht werden. Besonders bevorzugt ist ein Verfahren zur Herstellung einer Abdichtung durch Injektion, wobei unter Druck gasförmiges Kohlendioxid in eine wässrige Wasserglas-haltige Lösung eingeleitet und die Mischung in ein Bodenmaterial über eine Injektionsvorrichtung injiziert wird, so dass sich eine Gelschicht bildet. Bevorzugt erfolgt die Einleitung gasförmigen Kohlendioxids dabei vor und/oder in der Injektionsvorrichtung. In einer alternativen Ausgestaltung des erfindungsgemäßen Verfahrens wird zunächst die wässrige Wasserglas-haltige Lösung in ein Bodenmaterial injiziert und anschließend das gasförmige Kohlendioxid. In einer weiteren alternativen Ausgestaltung des erfindungsgemäßen Verfahrens wird zunächst das gasförmige Kohlendioxid in ein Bodenmaterial injiziert, in dem es sozusagen ein Depot bildet, und anschließend die wässrige Wasserglas-haltige Lösung. Auch Kombinationen der angeführten drei alternativen Ausgestaltungen des erfindungsgemäßen Verfahrens sind möglich. Das gasförmige Kohlendioxid wird bevorzugt unter Druck in das Bodenmaterial oder die wässrige Wasserglas-haltige Lösung eingeleitet beziehungsweise injiziert.

Im Unterschied zu üblichen Injektionsverfahren unter Einsatz beispielsweise einer Wasserglas-haltigen Lösung, die als Reaktiv Natriumaluminat-Lösung umfasst, kann beim erfindungsgemäßen Verfahren auf einen aktiven Mischer, also z.B. einen solchen mit einem Motor oder einen von Hand zu bedienenden, für die Mischung der Wasserglaslösung mit mindestens einem Reaktiv verzichtet werden. Denn durch die Einleitung beziehungsweise Injektion gasförmigen Kohlendioxids wird eine ausreichend gleichmäßig durchmischte Mischung bereits "von selbst" erhalten, so dass mit dem erfindungsgemäßen Verfahren einfach ein kontinuierlicher Prozess zur Herstellung einer Dichtsohle durchgeführt werden kann. Dabei kann in der bevorzugten Ausgestaltung des erfindungsgemäßen Verfahrens eine passive Mischstrecke oder ähnliches vorgesehen sein, über die das Gemisch aus gasförmigen Kohlendioxid und der wässrigen Wasserglas-haltigen Lösung geführt wird bis zur Injektionsvorrichtung, oder aber die passive Mischstrecke ist in die Injektionsvorrichtung verlagert oder liegt nicht vor. Bei dem aus dem Stand der Technik bekannten Verfahren muss stets vor Injektion eine aktive Mischung aus beispielsweise einer Wasserglas-haltigen beziehungsweise einer Kieselsol-haltigen Lösung mit entsprechenden Reaktiven mittels zum Beispiel eines motorgetriebenen Mischers vorgenommen werden. Dies entfällt bevorzugt bei dem erfindungsgemäßen Verfahren. Das gasförmige Kohlendioxid kann vorteilhafterweise unmittelbar vor der Injektionsvorrichtung in die wässrige Wasserglas-haltige Lösung und/oder sogar in die Injektionsvorrichtung und der dort ebenfalls eingeleiteten wässrigen Wasserglas-haltigen Lösung eingeleitet werden. Hierdurch wird die durch das gasförmige Kohlendioxid hervorgerufene Gelbildung vorteilhafterweise erst spät initiiert.

Das erfindungsgemäße Verfahren ermöglicht vorteilhafterweise, dass stets nur soviel Wasserglas-haltige Lösung mit Kohlendioxid versetzt werden kann, wie auch benötigt wird. Sollten bei einer Injektion in ein Bodenmaterial Probleme auftreten, kann das Verfahren einfach angehalten und nach Behebung der Probleme fortgesetzt werden. Durch die Führung des Verfahrens in einem bevorzugt kontinuierlichen Austragungsprozess können des Weiteren auch Einflüsse der Umgebungstemperatur minimiert werden, insbesondere, wenn auch die Herstellung der wässrigen Wasserglas-haltigen Lösung kontinuierlich erfolgt. Und schließlich kann bei einer jeden Injektion eine sogenannte Kippzeit angepasst auf die gegebenen Bedingungen (Temperatur, Feuchtigkeit, etc.) an der Baustelle eingestellt werden, so dass die Injektionen gleichmäßiger verlaufen. Zudem können auch kürzere Kippzeiten eingestellt werden aufgrund der erst späten Initiierung der Gelbildung. Hierdurch wird die Kontaktzeit von noch flüssigem Gemisch aus der wässrigen Wasserglas-haltigen Lösung mit darin aufgenommenem gasförmigen Kohlendioxid mit Grundwasser und umgebenden Bodenmaterial verkürzt. Das erfindungsgemäße Verfahren zeichnet sich durch eine hohe Umweitfreundlichkeit aus, da keine zusätzlichen Chemikalien wie beispielsweise Metallsalze in Form einer Natriumaluminat-Lösung in den Boden eingetragen werden. Zudem ist es auf diese Weise auch möglich, Kohlendioxid, welches ein Treibhausgas darstellt, im Boden zu binden. Das mit dem erfindungsgemäßen Verfahren bildbare Gel ist ein Weichgel, insbesondere ein elastisches Weichgel, welches im Vergleich zu Hartgelen feststoffärmer ist. Dies unterscheidet im Übrigen das erfindungsgemäße Verfahren von solchen Verfahren, die einer Bodenverfestigung dienen. Bei solchen Verfahren wird in Bodenmaterial eine Wasserglas-haltige Mischung mit einem Reaktiv injiziert, welche sich mit dem Bodenmaterial vermischt und dieses verfestigt. Dazu weisen die dort eingesetzten Wassergläser hohe Siliziumdioxidgehalte von größer 15 Gew.-%, bezogen auf die Gesamtmenge der eingesetzten wässrigen Wasserglas-haltigen Lösung mit Reaktiv etc., auf, mit denen Hartgele gebildet werden, um eine Verfestigungswirkung im Bodenmaterial hervorzurufen. Demgegenüber liegen die Siliziumdioxidgehalte der in dem erfindungsgemäßen Verfahren einsetzbaren Wassergläser unter etwa 6 Gew.-%, bezogen auf die Gesamtmenge der wässrigen Wasserglas-haltigen Lösung, die auch noch weitere Additive oder Reaktive enthalten kann, so dass ein Weichgel gebildet wird.

Und schließlich weist die Mischung aus einer wässrigen, mindestens ein Wasserglas enthaltenden Lösung und gasförmigem Kohlendioxid als auch das hieraus hergestellte Gel bevorzugt einen pH-Wert auf, welcher weder im stark oder stärker alkalischen Bereich noch im sauren Bereich liegt und daher umweltfreundlich und grundwasserschonend ist. Bevorzugt wird der pH-Wert der Mischung in einem Bereich von etwa 6,5 bis etwa 10,5, weiter bevorzugt bis etwa 10, und noch weiter bevorzugt in einem Bereich von etwa 6,7 bis etwa 9,5, eingestellt. Der pH-Wert wird unmittelbar, d.h. maximal 5 Minuten nach Herstellung der wässrigen Wasserglas-haltigen Lösung und vollständiger Zugabe des Kohlendioxids bestimmt. In der Regel erhöht oder erniedrigt er sich nach der Herstellung etwas, bei einer zweistufigen Verfahrensführung, wie weiter unten besprochen, erniedrigt er sich anfangs deutlich, um sich dann nach 24 bis 48 Stunden auf einen Wert im Wesentlichen entsprechend dem pH-Wert nach vollständiger Zugabe des gasförmigen Kohlendioxids einzupendeln.

In einer vorteilhaften Ausführungsform des erfindungsgemäßen Verfahrens weist das in der wässrigen Lösung enthaltene mindestens eine Wasserglas ein Molmodul in einem Bereich von etwa 2,5 bis etwa 4,0, bevorzugt in einem Bereich von etwa 3,35 bis etwa 3,95, auf.

Soweit in der vorliegenden Erfindung der Begriff "etwa" oder "im Wesentlichen" im Zusammenhang mit Werten, Wertebereichen oder werthaltigen Begriffen verwendet wird, versteht hierunter der angesprochene Fachmann dasjenige, was dieser in dem gegebenen Zusammenhang als fachmännisch üblich ansehen wird. Insbesondere sind Abweichungen der angegebenen Werte, Wertebereiche oder werthaltigen Begriffe von +/- 10 %, bevorzugt +/- 5 %, weiter bevorzugt +/- 2 %, von dem Begriff "etwa" oder "im Wesentlichen" umfasst. Soweit verschiedene Bereiche für Mengenangaben in Bezug auf Bestandteile und Definitionen der wässrigen Wasserglas-haltigen Lösung, die auch weitere Additive/Zuschlagstoffe und Reaktive enthalten kann, in der vorliegenden Erfindung angegeben sind, sind die Untergrenzen und die Obergrenzen der verschiedenen Bereiche in Bezug auf den jeweiligen Bestandteil und die jeweilige Definition miteinander kombinierbar.

Durch den Einsatz mindestens eines Wasserglases mit einem höheren Molmodul in einem Bereich von etwa 3,2 bis etwa 4,0 wird die Menge von Alkalien im Gel reduziert, wodurch die Gefahr eines Übertrittes von Alkalikationen in das Grundwasser reduziert wird. Auch ist eine gute Gelbildung auch bei einer im Vergleich zu Wassergläsern mit einem niedrigeren Molmodul reduzierten Menge an benötigtem Kohlendioxid als Reaktiv möglich. Durch den Einsatz mindestens eines Wasserglases mit einem niedrigeren Molmodul in einem Bereich von etwa 2,5 bis etwa 3,2 werden vorteilhafterweise feiner vernetzte Gele gebildet, die sehr homogen sind. Das Molmodul sagt aus, in welchem Molverhältnis Siliziumdioxid und Alkalioxid vorliegen. Das Molmodul wird auch Molverhältniszahl (MVZ) genannt. Der erfindungsgemäß gewählte Bereich liegt am oberen Ende der sogenannten Untergruppe der neutralen Wassergläser und deckt den daran anschließenden Bereich bis zur Untergrenze der Untergruppe der hochkieselsauren Wassergläser ab. Besonders bevorzugt im Sinne der vorliegenden Erfindung ist das Molmodul gewählt als in einem Bereich von etwa 3,35 bis etwa 3,95, weiter bevorzugt als in einem Bereich von etwa 3,4 bis etwa 3,92, liegend.

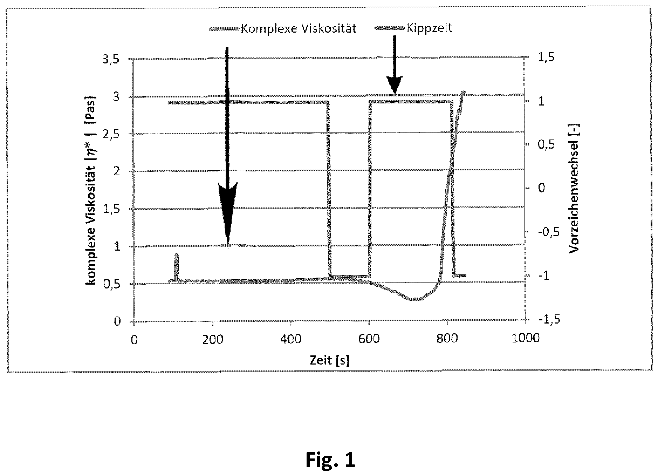

Unter Kippzeit wird die Zeit verstanden, in der eine Injektionslösung zur Bildung einer Abdichtung noch pumpbar beziehungsweise injizierbar in ein Bodenmaterial ist. Sie kann auch als Verarbeitungszeit angesprochen werden. Oft wird sie auch als die Zeit beschrieben, in der eine Injektionslösung beim Kippen eines Bechers noch flüssig ausläuft. Eine einheitliche Methode zur Bestimmung dieser wesentlichen Kenngröße existiert nicht. In der vorliegenden Erfindung wird die Kippzeit bestimmt durch eine viskosimetrische Kippzeitbestimmung. Diese erfolgte mit einem kugelgelagerten Oszillationsrheometer HAAKE Viskotester IQ, bezogen über die Firma Thermo Fischer Scientific Inc., Niederlassung Karlsruhe, Deutschland, mittels welchem die komplexe Viskosität über die Zeit ermittelt wurde. Die ermittelten Messdaten wurden über eine Software eingelesen und ausgewertet. Dabei erfolgte zunächst eine Glättung mittels eines Mittelwertfilters mit einer Fenstergröße von 7 Messpunkten, wobei im Anschluss die Ableitung einer geglätteten Kurve gebildet und diese wiederum mit einem Mittelwertfilter mit einer Fenstergröße von 5 Datenpunkten geglättet wurde. Anschließend wurde durch Ableitung die Steigung der Kurve der komplexen Viskosität ermittelt dahingehend, ob diese positiv oder negativ ist, und dies dann auch für die nächsten 35 Datenpunkte fortgeschrieben. Dabei durften maximal 5 Datenpunkte der ersten Ableitung positiv sein. Als weitere Randbedingung musste die komplexe Viskosität 10 Datenpunkte später geringer sein als die aktuelle komplexe Viskosität. Für die Wahl der richtigen Kippzeit wurde dann noch der Vorzeichenwechsel graphisch erfasst. Ein Beispiel einer solchen Ermittlung der Kippzeit aus der komplexen Viskosität im Sinne der vorliegenden Erfindung ist in Fig. 1 angegeben.

Die wässrige Zusammensetzung weist variabel einstellbare Kippzeiten in einem Bereich von etwa 1 Minute, bevorzugt von etwa 15 Minuten, bis etwa 240 Minuten, bevorzugt bis etwa 180 Minuten, und weiter bevorzugt bis etwa 120 Minuten, bevorzugt in einem Bereich von etwa 5 Minuten bis etwa 100 Minuten, weiter bevorzugt in einem Bereich von etwa 10 Minuten bis etwa 90 Minuten, bevorzugt bis etwa 60 Minuten, auf.

In der wässrigen, mindestens ein Wasserglas enthaltenden Lösung kann genau ein Wasserglas vorliegen, es können jedoch auch Mischungen verschiedener Wassergläser eingesetzt werden, beispielsweise verschiedener Wassergläser mit unterschiedlichen Molmodulen in den angegebenen erfindungsgemäßen und weiter bevorzugten Bereichen. Bevorzugt ist das mindestens eine Wasserglas ausgewählt aus einer Gruppe umfassend Kaliumwasserglas und Natriumwasserglas, bevorzugt ist das mindestens eine Wasserglas ein Natriumwasserglas. Es können aber auch Mischungen aus mindestens einem Natriumwasserglas und mindestens einem Kaliumwasserglas eingesetzt werden, bevorzugt mit Molmodulen in den vorstehend angegebenen Bereichen. Besonders bevorzugt wird mindestens ein Natriumwasserglas, weiter bevorzugt genau ein Natriumwasserglas, eingesetzt mit einem Molmodul in einem Bereich von etwa 3,4 bis etwa 3,9, weiter bevorzugt in einem Bereich von etwa 3,42 bis etwa 3,85. Derartige Natriumwassergläser zeigen aus der komplexen Viskosität, wie oben beschrieben, ermittelte Kippzeitkurven in der wässrigen Gesamtzusammensetzung bei Austrag aus der Injektionsvorrichtung nach Einleitung gasförmigen Kohlendioxids, welche eher flach verlaufen, wodurch sich längere Kippzeiten ergeben. Besonders bevorzugt wird mindestens ein Natriumwasserglas, bevorzugt genau ein Natriumwasserglas, mit einem Molmodul in einem Bereich von etwa 3,4 bis etwa 3,5 eingesetzt. Weiter bevorzugt wird mindestens ein Natriumwasserglas, bevorzugt genau ein Natriumwasserglas, mit einem Molmodul in einem Bereich von etwa 3,8 bis 3,9 eingesetzt.

In einer weiter bevorzugten Ausführungsform des erfindungsgemäßen Verfahrens weist das in der wässrigen Lösung enthaltene mindestens eine Wasserglas einen Siliziumdioxid-Gehalt in einer Menge in einem Bereich von etwa 0,5 Gew.-% bis etwa 5 Gew.-%, bevorzugt in einem Bereich von etwa 0,9 Gew.-% bis etwa 3,2 Gew.-%, und weiter bevorzugt in einem Bereich von etwa 1,3 Gew.-% bis etwa 2,9 Gew.-%, bezogen jeweils auf die Gesamtmenge der wässrigen Lösung, auf. Bei derartigen Siliziumdioxidgehalten wird erfindungsgemäß ein Weichgel erhalten und kein Hartgel. Vorteilhafterweise ist bei den genannten erfindungsgemäßen und bevorzugten Bereichen betreffend den Siliziumdioxid-Anteil der wässrigen Lösung eine Verlängerung der Kippzeit möglich im Vergleich zu Siliziumdioxid-Gehalten, die außerhalb der beanspruchten Bereiche, insbesondere oberhalb der genannten Bereiche, liegen. Weiterhin kann eine wässrige Lösung und damit auch ein aus dieser hergestelltes Gel mit einem pH-Wert hergestellt werden, der unter 10 liegt und bevorzugt in einem Bereich von etwa 6,8 bis etwa 9,8 liegt. Darüber hinaus wird vorteilhafterweise bei einem Siliziumdioxid-Gehalt in den genannten Bereichen, bezogen auf die Gesamtmenge der wässrigen Lösung, letztendlich nur eine geringe Menge an Alkalioxid eingesetzt, welches so gut wie vollständig durch das eingesetzte gasförmige Kohlendioxid neutralisiert wird. Bei den genannten Siliziumdioxid-Gehalten wird vorteilhafterweise die Bildung eines (Weich-)Gels mit einem feinen Netzwerk, in dem eine Vernetzung über Siliziumtetraoxid-Tetraeder ohne Fremdatome vorliegt, und kleinen Silikatpartikeln in diesem Netzwerk unterstützt, wodurch das gebildete Gel eine bessere Langzeitstabilität und damit Lebensdauer aufweist als vergleichbare, aus Wasserglas hergestellte Gele mit Natriumaluminatlösung als Reaktiv. Auch wird letztendlich das Grundwasser geschützt, denn aufgrund der mehr oder weniger vollständigen Vernetzung wird ein Austritt von Silikaten und/oder Metallsalzen aus dem Gel verringert, wodurch eine negative Beeinflussung des Bodenmateriales oder aber des Grundwassers und der Bodenfauna verringert werden kann.

Erfindungsgemäß umfasst die wässrige Lösung mindestens ein Reaktiv (zusätzlich zu dem als Reaktiv wirkenden gasförmigen Kohlendioxids) ausgewählt aus einer Gruppe umfassend Methylester, Ethylester und/oder Propylester der Adipinsäure, Apfelsäure, Ascorbinsäure, Zitronensäure, Essigsäure, Oxalsäure, Weinsäure, sowie von Dicarbonsäuren, als auch ausgewählt aus Carbonsäureestern mit Kohlenstoffketten mit 1 bis 4 Kohlenstoffatomen, Dicarbonsäureestern mit Kohlenstoffketten mit 1 bis 6 Kohlenstoffatomen und Triglyceriden. Die Carbonsäureester weisen zwei Organyl-Gruppen auf, die jeweils die genannten Kettenlängen der Kohlenstoffkette aufweisen. Die Dicarbonsäureester weisen ebenfalls zwei Organyl-Gruppen auf, die die genannten Kettenlängen der Kohlenstoffkette aufweisen, wobei aber auch die Länge der Kohlenstoffkette zwischen den beiden Estergruppen 1 bis 6 Kohlenstoffatome aufweisen kann. Erfindungsgemäß können cyclische Carbonsäureester wie insbesondere Lactone vorgesehen sein. Je nach Funktionalisierung der genannten organischen Säuren, einschließlich derjenigen mit 1 bis 6 Kohlenstoffatomen zur Bildung von Dicarbonsäureestern und derjenigen mit 1 bis 4 Kohlenstoffatomen zur Bildung von Carbonsäureestern, und Veresterungsgrad können Mono-, Di- oder Tripropyl-, -methyl- oder-ethylester vorliegen. Erfindungsgemäß besonders bevorzugt als Ester sind Propylencarbonat, Triacetin (Glycerintriacetat) und/oder dibasische Ester (DBE), d.h. Dimethylester von Dicarbonsäuren. Besonders bevorzugt ist Propylencarbonat, insbesondere in einem zweistufigen Verfahren, wie weiter unten beschrieben. Weiter bevorzugt ist bei dem ein- oder zweistufigen Verfahren, bevorzugt zweistufigen Verfahren, der mindestens eine Ester ausgewählt aus einer Gruppe umfassend Propylencarbonat, Triacetin (Glycerintriacetat) und/oder dibasische Ester (DBE), d.h. Dimethylester von Dicarbonsäuren, und ist weiter bevorzugt Propylencarbonat. Die genannten Ester werden bevorzugt in ihrer Reinform, dass heißt unverdünnt, und weiter bevorzugt in flüssiger Form, eingesetzt. Aber auch Mischungen aus den genannten Estern mit Wasser verdünnt sind möglich, soweit eine Mischbarkeit gegeben ist. Allerdings müsste dann gegebenenfalls die Konzentration des mindestens einen Wasserglases hochgesetzt werden, was nachteilig für die Vernetzungsreaktion sein kann, so dass keine gleichmäßig ausgebildeten Weichgele erhältlich sein können. Weiter bevorzugt umfasst die wässrige Wasserglas-haltige Lösung mindestens ein Reaktiv als Reinsubstanz in Form mindestens eines flüssigen, unverdünnten Esters, wie dieser weiter oben beschrieben ist, in einer Menge in einem Bereich von etwa 0,15 Gew.-%, bevorzugt von etwa 0,25 Gew.-%, noch weiter bevorzugt von etwa 0,8 Gew.-%, bis etwa 5 Gew.-%, bevorzugt bis etwa 2,5 Gew.-%, weiter bevorzugt bis etwa 1,9 Gew.-%, bezogen auf die Gesamtmenge der wässrigen Wasserglas-haltigen Lösung. "Als Reinsubstanz" bedeutet, dass ein Lösemittel wie Wasser nicht berücksichtigt ist, also die Menge des Reaktivs ohne Lösemittel, wie beispielsweise ein reiner unverdünnter flüssiger Ester, damit gemeint ist. Besonders bevorzugt ist das mindestens eine Reaktiv als Reinsubstanz, insbesondere in Form der vorgenannten unverdünnten flüssigen Ester, in einer Menge in einem Bereich von etwa 0,5 Gew.-% bis etwa 4,5 Gew.-% und weiter bevorzugt in einem Bereich von etwa 0,8 Gew.-% bis etwa 4 Gew.-%, jeweils bezogen auf die Gesamtmenge der wässrigen Wasserglas-haltigen Lösung, von dieser umfasst. Soweit eine Mischung von Reaktiven, beispielsweise zwei, drei oder mehr Reaktive, in dem einstufigen oder zweistufigen Verfahren eingesetzt werden, gelten die vorstehend angegebenen Mengenbereiche für die Gesamtmenge einer wässrigen Wasserglas-haltigen Lösung.

Weiter bevorzugt umfasst die wässrige Lösung mindestens ein Verdickungsmittel. Vorteilhafterweise kann durch die Zugabe mindestens eines Verdickungsmittels eine Einstellung der Viskosität der wässrigen Lösung erfolgen, welche Einfluss auf die Gelbildung und damit auch auf die Kippzeit hat. Besonders bevorzugt wird durch das mindestens eine Verdickungsmittel die Viskosität der wässrigen Lösung gerade zu Beginn der Reaktion zwischen dem gasförmigen Kohlendioxid und dem mindestens einen Wasserglas erhöht, und dadurch die Reaktionsgeschwindigkeit der Gelbildung herabgesetzt. Bevorzugt ist das mindestens eine Verdickungsmittel ausgewählt aus einer Gruppe umfassend Alginate, Pektine, Stärken, Xanthan, Kaolin, Bentonite, Celluloseester wie Carboxymethylcellulose oder Hydroxethylcellulose, Polyacrylate, Tone der Zweischicht-und/oder Dreischichtmineralgruppe und/oder Polyurethane. Besonders bevorzugt ist das mindestens eine Verdickungsmittel in der wässrigen Lösung in einer Menge in einem Bereich von etwa 0,05 Gew.-% bis etwa 2,5 Gew.-%, bezogen auf die Gesamtmenge der Wasserglas-haltigen Lösung, enthalten. Das oder die Verdickungsmittel reagieren nicht mit der Wasserglas-haltigen Lösung, sondern beeinflussen deren Viskosität, indem diese erhöht wird. Die wässrige Lösung kann auch anorganische Salze als Stabilisierungsmittel umfassen. Die anorganischen Salze sind bevorzugt ausgewählt aus einer Gruppe umfassend Sulfate, Carbonate, Hydrogencarbonate, Chloride, Phosphate, Nitrate und Oxide von Natrium, Kalium, Lithium, Magnesium und oder Kalzium. Besonders bevorzugt ist das mindestens eine Stabilisierungsmittel in der wässrigen Lösung in einer Menge in einem Bereich von etwa 0,01 Gew.-% bis etwa 1 Gew.-%, bezogen auf die Gesamtmenge der Wasserglas-haltigen Lösung, enthalten. Zur Modifizierung des Molmoduls des mindestens einen Wasserglases in der wässrigen Lösung kann die wässrige Lösung vorteilhafterweise auch Kieselsäure umfassen, bevorzugt in einer Menge in einem Bereich von etwa 0,01 Gew.-% bis etwa 2 Gew.-%, bezogen auf die Gesamtmenge der Wasserglas-haltigen Lösung.

Die wässrige, mindestens ein Wasserglas umfassende Lösung umfasst vorzugsweise einen Gesamtgehalt an Wasser in einem Bereich von etwa 75 Gew.-% bis etwa 99 Gew.-%, weiter bevorzugt in einem Bereich von etwa 78 Gew.-% bis etwa 99 Gew.-%, und noch weiter bevorzugt von etwa 85 Gew.-% bis etwa 98 Gew.-%, bezogen auf die Gesamtmenge der wässrigen Lösung. Mit Wasser wird das mindestens eine Wasserglas versetzt, so dass sich eine Lösung des mindestens einen Wasserglases in Wasser ergibt. Es kann deionisiertes Wasser oder Leitungswasser, Brunnenwasser und/oder Grundwasser eingesetzt werden, auch entsalztes Meerwasser ist einsetzbar.

Weiter bevorzugt umfasst die wässrige Wasserglas-haltige Lösung mindestens ein Wasserglas mit einem Feststoffgehalt in einem Bereich von etwa 1 Gew.-% bis etwa 6 Gew.-%, bezogen auf die Gesamtmenge der Zusammensetzung. Besonders bevorzugt weist die wässrige Wasserglas-haltige Lösung einen Feststoffgehalt des mindestens einen Wasserglases in einem Bereich von etwa 1,2 Gew.-% bis etwa 5,8 Gew.-%, bezogen auf die Gesamtmenge der wässrigen Wasserglas-haltigen Lösung, auf. Ganz besonders bevorzugt liegt der Feststoffgehalt des mindestens einen Wasserglases in einem Bereich von etwa 1,4 Gew.-% bis etwa 5,7 Gew.-%, bezogen auf die Gesamtmenge der wässrigen Wasserglas-haltigen Lösung. Soweit eine Mischung von Wassergläsern, beispielsweise aus zwei, drei oder mehr Wassergläsern vorliegt, gelten die vorstehend angegebenen Mengenbereiche für die Menge an Feststoffgehalt einer solchen Mischung. Der Feststoffgehalt wird bestimmt, indem ein (1) Gramm des mindestens einen Wasserglases in einem geeigneten, vorgeglühten und wieder erkalteten Tiegel bei einer Temperatur von etwa 650°C entwässert und geglüht wird über 60 Minuten, wobei die Temperatur langsam auf die Glühtemperatur von etwas 650°C gebracht wird. Dabei können Trägersubstanzen wie Sand eingesetzt werden, die ein Verspritzen des Wasserglases bei Erhitzung vermeiden. Aus dem durch einen Vergleich vor und nach Glühung durch Wägung ermittelten Glühverlust wird der Feststoffgehalt ermittelt, der dem Glührückstand entspricht. Der Feststoffgehalt besteht im Wesentlichen aus Siliziumdioxid und Natriumdioxid bei einem Natriumwasserglas und aus Siliziumdioxid und Kaliumoxid bei einem Kaliumwasserglas.

Besonders bevorzugt im Sinne der vorliegenden Erfindung wird eine wässrige Wasserglas-haltige Lösung zur Bildung eines Weichgels eingesetzt, umfassend mindestens ein, bevorzugt genau ein, Natriumwasserglas mit einem Molmodul in einem Bereich von etwa 3,3 bis etwa 3,9, bevorzugt in einer Menge in einem Bereich zwischen etwa 7,5 Gew.-% und etwa 11,5 Gew.-%, bezogen auf die Gesamtmenge der wässrigen Wasserglas-haltigen Lösung, und als Reaktiv mindestens einen Ester, bevorzugt Propylencarbonat, in einer Menge in einem Bereich von etwa 0,15 Gew.-% bis etwa 2 Gew.-%, bezogen auf die Gesamtmenge der wässrigen Wasserglas-haltigen Lösung, wobei die wässrige Wasserglas-haltige Lösung bevorzugt einen pH-Wert in einem Bereich von etwa 8 bis etwa 10,5 aufweist, wobei der Siliziumdioxid-Gehalt in einem Bereich von etwa 1,3 Gew.-% bis etwa 3 Gew.-%, bevorzugt in einem Bereich von etwa 2,3 Gew.-% bis etwa 2,8 Gew.-%, bezogen auf die Gesamtmenge der wässrigen Wasserglas-haltigen Lösung, beträgt. Dabei ist besonders bevorzugt, wenn das mindestens eine Reaktiv in einem ersten Schritt einer verdünnten, wässrigen Wasserglaslösung zugegeben, und bevorzugt vermischt, und der solchermaßen erhaltenen wässrigen Wasserglas-haltigen Lösung mit dem mindestens einen Ester in einem zweiten Schritt das gasförmige Kohlendioxid nachfolgend, bevorzugt vor und/oder in der Injektionsvorrichtung, in diese eingeleitet wird.

Die wässrige Wasserglas-haltige Lösung wird vorzugsweise in einem kontinuierlichen Verfahren hergestellt. Dazu kann beispielsweise aus getrennten Zuführungsleitungen zu einem aktiven Mischer das mindestens eine Wasserglas und das Wasser geführt, in diesem gemischt und schon während der Mischung kontinuierlich aus dem Mischer abgeleitet und der Injektionsvorrichtung zugeführt werden, wobei vor und/oder in der Injektionsvorrichtung das gasförmige Kohlendioxid eingeleitet wird, eventuell auch erst kurz vor Austragung der Mischung aus der Injektionsvorrichtung.

In einer bevorzugten Ausführungsform des erfindungsgemäßen Verfahrens erfolgt die Einleitung von gasförmigem Kohlendioxid in die wässrige Wasserglas-haltige Lösung kontinuierlich. Sie kann batchartig erfolgen, indem die Lösung in einem Druckbehälter vorgelegt und anschließend das gasförmige Kohlendioxid unter Druck eingedüst wird. Die kontinuierliche Einleitung unterstützt den vorteilhaften kontinuierlichen Austrag der Mischung aus gasförmigen Kohlendioxid und der mindestens ein Wasserglas-enthaltenen wässrigen Lösung über eine Injektionsvorrichtung. Vorteilhafterweise ist es dabei möglich, aktive Mischer gleich welcher Art zu vermeiden, so dass der apparative Aufwand des erfindungsgemäßen Verfahrens im Vergleich zu dem Stand der Technik bekannten üblichen Verfahren erheblich reduziert ist, insbesondere bei Herstellung der verdünnten Wasserglas-haltigen Lösung ebenfalls in einem kontinuierlichen Verfahren. Gleichwohl kann eine passive Mischstrecke oder eine sonstige passive, also nicht aktive Mischung nachfolgend der Einleitung von gasförmigem Kohlendioxid in die wässrige Wasserglas-haltige Lösung vorgesehen sein.

In einer weiteren bevorzugten Ausführungsform des erfindungsgemäßen Verfahrens erfolgt die Einleitung von gasförmigem Kohlendioxid in die wässrige Wasserglas-haltige Lösung lateral, über eine Ringspaltdüse, bevorzugt zentral bei einer solchen Anordnung derselben in z.B. einer Zuführleitung der wässrigen Wasserglas-haltigen Lösung, die vor oder auch in der Injektionsvorrichtung angeordnet ist, und/oder im Gegenstrom. So kann beispielsweise bei Vorsehung einer Ringspaltdüse das gasförmige Kohlendioxid auch im Gegenstrom zur wässrigen Wasserglas-haltigen Mischung eingeleitet werden. Bei einer Einleitung im Gegenstrom erfolgt vorteilhafterweise eine gleichmäßigere Verteilung des gasförmigen Kohlendioxids in der wässrigen Lösung, wodurch der Vernetzungsgrad des erhaltenen Gels gesteigert werden kann. Alternativ wäre es auch möglich, mindestens einen porösen statischen Mischer zu verwenden, der zum Beispiel als ein Einbauobjekt in der Zuführleitung zur Injektionsvorrichtung vorgesehen sein kann. Aktive Mischer sind nicht vorgesehen, diese würden den apparativen Aufwand nachteilig erhöhen.

In einer weiter bevorzugten Ausführungsform wird die wässrige Wasserglas-haltige Lösung durch mindestens ein Pumpmittel verdichtet. Diese Verdichtung erfolgt vorteilhafterweise vor Einleitung des gasförmigen Kohlendioxids. Durch die erfolgte Verdichtung kann die Lösung des gasförmigen Kohlendioxids in der wässrigen Lösung weiter verbessert werden. Zudem ist es möglich, durch die Vorsehung geeigneter Pumpmittel, bevorzugt mindestens zweier Pumpmittel, beispielsweise in Form einer Pumpenanordnung mit zwei Kolbenpumpen, einen gleichmäßigen Druck- und Massestrom zur Verfügung zu stellen, woraus eine gleichmäßige Mischung des gasförmigen Kohlendioxids in der wässrigen Lösung erfolgt. Die mindestens zwei Pumpmittel einer Pumpenanordnung werden dabei bevorzugt parallel geschaltet beziehungsweise parallel eingesetzt. Bei Austragung der Mischung des gasförmigen Kohlendioxids mit der wässrigen Wasserglas-haltigen Lösung durch die Injektionsvorrichtung tritt an der Austragsöffnung ein Druckabfall auf, der auch ohne Vorsehung von mindestens einem Pumpmittel ausreichend ist, eine hinreichend Menge des gasförmigen Kohlendioxids in der wässrigen Wasserglas-haltigen Lösung zur Bildung eines Gels zur Verfügung zu stellen. Vorteilhafterweise wird in einer weiteren Ausführungsform des erfindungsgemäßen Verfahrens zu Beginn der Injektion vorab Wasser initiiert. Hierdurch kann einfach ein für die Austragung als auch die Lösung des gasförmigen Kohlendioxids in der wässrigen Wasserglas-haltigen Lösung notwendiger Betriebsdruck aufgebaut werden. In einer hierzu alternativen Ausführungsform kann auch vorgesehen sein, dass über ein Absperrorgan wie beispielsweise eine schaltbare Blende zu Beginn der Injektion ein Druck erhöht wird. Aber auch eine Kombination der beiden vorgenannten Verfahren ist möglich.

Bei einer zweistufigen Verfahrensführung wird zusätzlich mindestens eines der Reaktive, wie weiter oben beschrieben, eingesetzt. Im ersten Schritt wird dabei nach Herstellung einer verdünnten, wässrigen Wasserglas-haltigen Lösung in einer Mischvorrichtung, zum Beispiel einem Statikmischer, dieser verdünnten Wasserglas-haltigen Lösung mindestens ein Reaktiv zugegeben, ggf. auch sonstige Additive wie Verdickungsmittel, wobei die Mischung mit der gleichen Mischvorrichtung, die zur Herstellung der verdünnten Wasserglas-haltigen Lösung eingesetzt wird, erfolgt, so dass man von einem Batch-Ansatz sprechen kann, oder die Mischung erfolgt über eine zweite Mischvorrichtung, beispielsweise wiederum ein Statikmischer, wobei dann eine Überführung der im ersten Teilschritt hergestellten wässrigen Wasserglas-haltigen Lösung in eine andere Aufnahmevorrichtung, die auch als Leitung ausgebildet sein kann, vorgenommen wird. Die solchermaßen in einem zweiten Teilschritt der ersten Stufe hergestellte, zumindest eines der weiter oben genannten Reaktive enthaltende verdünnte wässrige Wasserglas-haltige Lösung geliert aufgrund der Eigenschaften der einsetzbaren Ester und der geringen Menge äußerst langsam, so dass die nachfolgende zweite Stufe nicht unmittelbar anschließend an die erste Stufe durchgeführt werden muss. Die zweite Stufe des erfindungsgemäßen Verfahrens bei zweistufiger Ausbildung desselben kann bevorzugt bis zu etwa 2 Stunden, weiter bevorzugt bis zu etwa 1 h, noch weiter bevorzugt bis zu etwa 20 min, nach der ersten Stufe oder aber unmittelbar im Anschluß an diese durchgeführt werden. In der zweiten Stufe wird wie auch in der ersten Stufe gasförmiges Kohlendioxid zugegeben in einer Menge, die ausreichend ist, innerhalb eines gegebenen Zeitrahmens ein Weichgel zu bilden. Die Zugabe des gasförmigen Kohlendioxids erfolgt bevorzugt wie weiter oben beschrieben, bevorzugt in einer Injektionsvorrichtung wie einer Injektionslanze, insbesondere nahe oder unmittelbar vor einer Austragsöffnung derselben. Ein Austrag aus einer Injektionsvorrichtung erfolgt bevorzugt wie weiter oben beschrieben. Auch das zweistufige Verfahren kann bevorzugt kontinuierlich durchgeführt werden.

In einer weiter bevorzugten Ausführungsform des erfindungsgemäßen Verfahrens sind Leitorgane oder Regelungsstellen vorgesehen, die die Zufuhren der Bestandteile der Mischung regeln, insbesondere selbsttägig. So kann beispielsweise eine Menge des in die wässrige wasserglas-haltige Lösung eingeleiteten gasförmigen Kohlendioxids durch einen Massenflussdetektor beziehungsweise ein Massenflusscontroller, beispielsweise einen thermisch arbeitenden, geregelt werden, wobei zum Beispiel der Volumenstrom oder der Massenstrom des gasförmigen Kohlendioxids oder der pH-Wert der erhaltenen Mischung bestimmt wird. Solche Leitorgane und Regelungsstellen können aber auch bei der Herstellung der wässrigen Wasserglas-haltigen Lösung eingesetzt werden. Es kann auch beispielsweise bei Vorsehung mindestens eines Pumpmittels zur Verdichtung der wässrigen Wasserglas-haltigen Lösung der hierdurch aufgebaute Betriebsdruck mitüberprüft und gegebenenfalls geregelt werden. So können Injektionen vorteilhafterweise gleichmäßig erfolgen, so dass eine qualitativ hochwertige, insbesondere grundwasserdichte Abdichtung erhalten werden kann. Zudem kann auch die Kippzeit sehr gut automatisiert eingestellt werden, wobei besonders bevorzugt unter Berücksichtigung des durch ein möglicherweise vorhandenes mindestens ein Pumpmittel maßgeblich erzeugten und ermittelten Betriebsdrucks als auch der Zuführung einer geregelten Menge an gasförmigem Kohlendioxid, die zusammen einen bestimmbaren und auch nachregelbaren Injektionsdruck bilden, die Injektion kontinuierlich durchgeführt und im Vergleich zu aus dem Stand der Technik bekannten üblichen Injektionsverfahren deutlich vereinfacht wird.

Die vorliegende Erfindung betrifft weiterhin die Verwendung von gasförmigem Kohlendioxid als Reaktiv zur Herstellung einer Abdichtung, beispielsweise einer Dichtsohle einer Baugrube, mit einer Bodengrubenbasis unterhalb des Grundwasserspiegels, aber auch sonstiger Dichtsohlen oder teilweisen oder vollständigen Abkapselungen für Deponien etc., aus einer wässrigen Wasserglas-haltigen Lösung mit mindestens einem der oben genannten Reaktive durch Injektion unter Bildung eines Weichgels. Zum Beispiel können Deponien solchermaßen zum Grundwasser hin abgedichtet werden oder aber Altlasten/Schadstoffe im Boden allseitig verkapselt werden zur Verhinderung einer Verseuchung des Grundwassers. Besonders bevorzugt ist im Sinne der vorliegenden Erfindung eine Verwendung derart, dass eine Mischung des gasförmigen Kohlendioxids und einer wässrigen Wasserglas-haltigen Lösung mit mindestens einem der oben genannten Reaktive in ein Bodenmaterial injiziert wird. Betreffend die erfindungsgemäßen Verwendungen und darin verwendeten wässrigen Wasserglas-haltigen Lösungen beziehungsweise Mischungen des gasförmigen Kohlendioxids mit einer wässrigen, mindestens ein Wasserglas-enthaltenen Lösung mit mindestens einem Reaktiv und gegebenenfalls sonstigen Zusätzen, wie weiter oben beschrieben, sei auf die obigen Ausführungen betreffend das erfindungsgemäße Verfahren verwiesen, ebenso wie in Hinblick auf die möglichen Injektionsverfahren. Die vorstehend in Zusammenhang mit dem erfindungsgemäßen Verfahren angeführten Vorteile und Eigenschaften werden hiermit vollumfänglich zum Gegenstand der erfindungsgemäßen Verwendungen gemacht.

Die Verwendung von gasförmigem Kohlendioxid unter Einleitung in eine wässrige Wasserglas-haltige zur Abdichtung durch Injektion in ein Bodenmaterial unter Bildung eines (Weich-)Gels ist vorteilhaft im Vergleich zu aus dem Stand der Technik gekannten Verfahren, wobei auf die Ausführungen weiter oben in Zusammenhang mit dem erfindungsgemäßen Verfahren verwiesen sei. Bevorzugt erfolgt die Injektion der Mischung aus gasförmigen Kohlendioxids und der wässrigen Wasserglas-haltigen Lösung mit mindestens einem der oben genannten Reaktive in ein Bodenmaterial in einer Schicht, welche unterhalb einer Baugrubenbasis oder unterhalb einer Deponie oder Altlast, und dabei weiter bevorzugt beabstandet von dieser, liegt. Dann kann ein Aufschwimmen der Abdichtung in Form einer Dichtsohle, welche einen Verbund des Bodenmateriales mit dem aus der Mischung gebildeten Gel darstellt, im Anwendungsfall einer Baugrube sicher vermieden werden.

Des Weiteren betrifft die vorliegende Erfindung eine Abdichtung, hergestellt mit dem erfindungsgemäßen Verfahren, wie diese weiter oben beschrieben ist, durch Injektion der Mischung in ein Bodenmaterial, als auch eine Baugrube mit einer Abdichtung in Form einer Dichtsohle, hergestellt mit dem erfindungsgemäßen Verfahren, wie vorstehend beschrieben, durch Injektion der Mischung in ein Bodenmaterial, wobei sich eine Weichgelsohle bildet. Eine Baugrube kann dabei insbesondere, wie auch in der DE 102 18 771 A1 ausgeführt, eine vertikale Sperre in Form einer Baugrubenumschließung aufweisen. Bevorzugt ist die Dichtsohle, bevorzugt die Dichtsohle einer Baugrube, aber auch eine solche einer Deponie etc., derart hergestellt, dass diese den Eintritt oder Durchtritt von Grundwasser oder in Gegenrichtung von Stoffen gleich welcher Art in das Grundwasser hinein verhindert. Eine Injektion der Mischung erfolgt vorzugsweise durch eine Abdichtungsinjektion, und hier weiter bevorzugt durch ein Niederdruckverfahren.

Mit dem erfindungsgemäßen Verfahren ist es vorteilhafterweise möglich, ein (Weich-)Gel zu bilden, welches eine Abdichtung, beispielsweise in Form einer Dichtsohle in einer Baugrube, ausbilden kann, wobei die wässrige Lösung beziehungsweise das gebildete Gel umweltfreundlich und grundwasserneutral ausgebildet ist. Durch die Vermeidung von schädlichen Metallsalzen als Reaktiv treten die damit verbundenen Probleme des Übergangs von der in dem Reaktiv vorhandenen Metallkationen in das Grundwasser beziehungsweise das umgebende Bodenmaterial nicht auf. Durch die einstellbaren, pH-Wert abhängigen Kippzeiten werden die durch eine Übersäuerung beziehungsweise zu hohe Alkalisierung auftretenden Nachteile vermieden. Es werden vernetzte Gele erhalten, wobei im Vergleich zu insbesondere aus dem Stand der Technik bekannten Gelen, die mittels Natriumaluminatlösung als Reaktiv hergestellt wurden, die Synärese erheblich geringer ausfällt. Die hergestellten Gele scheiden mit der Zeit eine Synäreseflüssigkeit aus und schrumpfen dabei. Dies wird als Synärese im vorliegenden Zusammenhang bezeichnet. Aufgrund der nur geringen Synärese bei den aus der erfindungsgemäßen wässrigen Lösung mit darin vorhandenem gasförmigem Kohlendioxid hergestellten Gelen ist eine geringere Schrumpfung festzustellen. Die solchermaßen hergestellten Gele weisen aufgrund der erfolgten Vernetzung ohne Einbau von Fremdatomen eine bessere Langzeitstabilität auf verglichen mit Gelen, die unter Einsatz von beispielsweise Natriumaluminatlösung als Reaktiv hergestellt wurden. Ganz besonders vorteilhafterweise lassen sich jedoch mit der erfindungsgemäßen Zusammensetzung Kippzeiten, auch automatisiert, sehr gut vor der eigentlichen Gelbildung einstellen, insbesondere, wenn der Siliziumdioxid-Gehalt des mindestens einen Wasserglases, wie weiter oben beschrieben, berücksichtigt wird, und insbesondere auch, wenn das Verfahren zweistufig durchgeführt wird. Durch die sehr weitgehende Vernetzung wird vorteilhafterweise das Silikat aus dem mindestens einen Wasserglas nahezu quantitativ im Gel gebunden. Schließlich werden auch weniger Alkaliionen in das umgebende Bodenmaterial und das Grundwasser abgegeben. Das erfindungsgemäße Verfahren kann kontinuierlich betrieben werden und ist kostengünstig durch die geringeren Einsatzmengen an Wasserglas aufgrund der Vermeidung von Übermengen an gelbildender Mischung, da die Einleitung gasförmigen Kohlendioxids jederzeit gestoppt und auch die Einleitung erst unmittelbar vor oder in der Injektionsvorrichtung erfolgen kann, als auch aufgrund des kostengünstigen Reaktivs in Form von gasförmigem Kohlendioxid.

Die Vorteile der vorliegenden Erfindung werden anhand der nachfolgenden Figuren und Beispiele näher erläutert. Es zeigen:
- Fig. 1:: eine graphische Auswertung zur Bestimmung der Kippzeit aus der komplexen Viskosität mit dem in der vorliegenden Erfindung verwendeten Verfahren zur Bestimmung der Kippzeit;
- Fig.2:: ein beispielhaftes Verfahrensfließbild des erfindungsgemäßen Verfahrens in einer bevorzugten Ausgestaltung;
- Fig. 3a:: Vergleich von Kippzeiten bei einem zweistufigen Verfahren mit einem Natriumwasserglas und einem Siliziumdioxid-Gehalt von 2,5 Gew.-% mit drei unterschiedlichen Estern und einem Vorneutralisierungsgrad von 70 % in Abhängigkeit einer zunehmenden Menge an zugegebenem gasförmigem Kohlendioxid; und
- Fig. 3b:: Vergleich von Kippzeiten bei einem zweistufigen Verfahren mit einem Natriumwasserglas und einem Siliziumdioxid-Gehalt von 2,5 Gew.-% mit drei unterschiedlichen Estern und einem Vorneutralisierungsgrad von 80 % in Abhängigkeit einer zunehmenden Menge an zugegebenem gasförmigem Kohlendioxid.

Die in der vorliegenden Erfindung angewandte Methode zur Bestimmung der Kippzeit wurde bereits vorstehend in der allgemeinen Beschreibung eingehend erläutert. Fig. 1 zeigt hierzu eine beispielhafte graphische Darstellung einer viskosimetrischen Kippzeitbestimmung mit einem Oszillationsrheometer Haake Viskotester IQ und die graphische Ermittlung der Kippzeit anhand des eingesetzten Algorithmus, wie ebenfalls bereits eingehend in der allgemeinen Beschreibung oben beschrieben. Der beispielhaften Auswertegraphik gemäß Fig. 1 kann dabei entnommen werden, dass durch Messwertrauschen bei der Messung zwei Kippzeiten (siehe die dort wiedergegebene Rechteckkurve) ermittelt wurden, nämlich bei etwa 500 Sekunden und einmal bei etwa 820 Sekunden. Die sich hieraus ergebende Kippzeit liegt bei 500 Sekunden, da stets bei Ermittlung mehrerer Kippzeiten aufgrund von Vorzeichenwechseln, erzeugt durch den dargelegten Algorithmus, diejenige Kippzeit, welche sich an dem Punkt befindet, an dem der Betrag der ermittelten komplexen Viskosität beginnt geringer zu werden, diejenige Kippzeit ist, die die relevante ist für den Einsatz der erfindungsgemäßen wässrigen Zusammensetzung im Rahmen der Erstellung von Abdichtungen, insbesondere in Form von Dichtsohlen und Baugruben mit Dichtsohlen, insbesondere durch Injektion, und der Bildung eines Gels, insbesondere eines Weichgels.

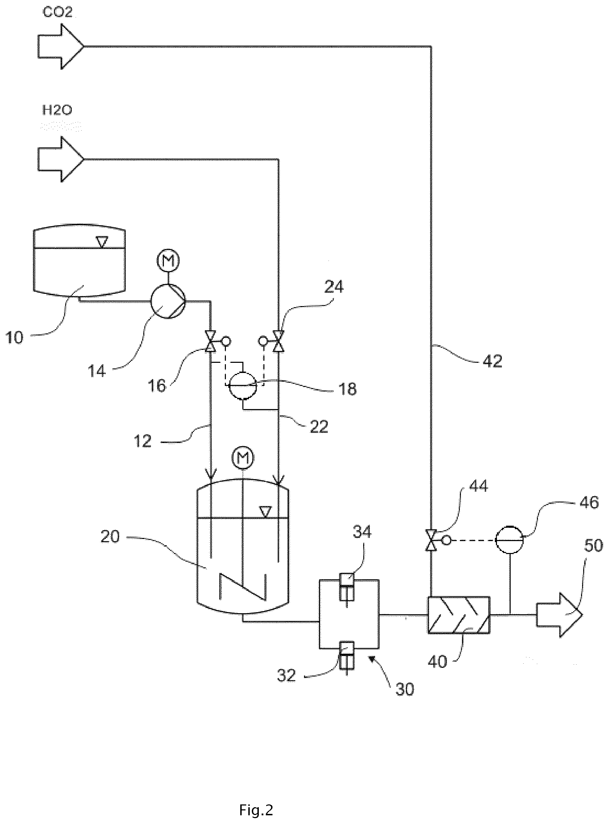

Fig. 2 zeigt ein skizzenhaftes Verfahrensfließbild, wie das erfindungsgemäße Verfahren in einer der bevorzugten Ausgestaltungen beispielhaft durchgeführt werden kann. In einem Tank 10 wird mindestens ein Wasserglas, beispielsweise ein Natriumwasserglas, vorgelegt, und über eine Pumpe 14, die motorbetrieben ist, über eine erste Leitung 12, einem Mischer 20, der ebenfalls motorgetrieben ist, zugeführt. Dabei ist zwischen der Pumpe 14 und dem Mischer 20 eine regelbare Absperrarmatur 16 angeordnet. In den Mischer 20 wird Wasser über eine zweite Zuleitung 22 zugeführt, wobei ein weiteres, regelbares Absperrorgan 24 dem Mischer 20 vorgeschaltet ist. Die beiden Absperrorgane 16 für das Wasserglas aus dem Tank 10 und 24 für die Zufuhr von Wasser sind über ein Leitorgan 18 regelbar, welches beispielsweise über eine Durchflussbestimmung den Durchfluss an Wasserglas anhand dessen Volumenstroms oder Massenstroms durch die erste Zuleitung 12 und Wasser anhand dessen Volumenstroms oder Massenstroms über die zweite Zuleitung 22 misst und gegebenenfalls die Absperrarmaturen 16 und 24, insbesondere selbsttätig, nachregelt. Alternativ könnten Wasser und das mindestens eine Wasserglas ausgewogen und in einem Batchverfahren gemischt werden, oder aber es kann eine manuelle Dosierung über die Volumenströme oder Massenströme vorgenommen werden.

Nachfolgend dem Tank 20 ist eine Pumpenanordnung 30 mit einer ersten Kolbenpumpe 32 und einer zweiten Kolbenpumpe 34 vorgesehen, die parallel geschaltet sind. Durch diese wird die aus dem Mischer 20 austretende Mischung von Wasserglas und Wasser auf Betriebsdruck gebracht und einer Mischstrecke 40 zugeführt.

Der Mischstrecke 40, welche keinen aktiven Mischer wie der Mischer 20 darstellt, wird über eine Dritte Zuleitung 42 gasförmiges Kohlendioxid zugeführt. In die dritte Zuleitung 42 ist eine weitere steuerbare Absperrarmatur 44 integriert, die mit einer Regelungsstelle 46 in Kontakt steht, die zum Beispiel als Durchflusskontrollvorrichtung ausgebildet ist, und zwischen Mischstrecke 40 und Injektionsvorrichtung 50, welches beispielsweise als übliche Injektionslanze, mit einem Packer versehen, ausgebildet sein kann, die Menge des in die wässrige Wasserglas-haltige Lösung in der Mischstrecke 40 eingeleiteten gasförmigen Kohlendioxids bestimmt, und gegebenenfalls über die regelbare Absperrarmatur 44 die zugeleitete Menge an gasförmigen Kohlendioxid, insbesondere selbsttätig, erhöht oder erniedrigt. Es könnte aber zum Beispiel auch vorgesehen sein, statt dem Volumenstrom oder dem Massenstrom des gasförmigen Kohlendioxids den pH-Wert der erzeugten Mischung zu ermitteln und entsprechend die Einleitung von gasförmigem Kohlendioxid zu regeln. Auch eine manuelle Steuerung des Volumenstroms oder des Massestroms des gasförmigen Kohlendioxids wäre selbstverständlich möglich. Alternativ kann es auch vorgesehen sein, dass das Kohlendioxid unmittelbar über die Injektionsvorrichtung 50 zugeleitet wird, und daher auf die Mischstrecke 40 verzichtet wird. Dann kann die Regelungsstelle 46 unmittelbar an der Injektionsvorrichtung 50 angreifen, bevorzugt kurz vor der Austragsöffnung der Injektionsvorrichtung 50.

Es wurden Vergleichsversuche durchgeführt, wobei unterschiedliche Wassergläser, und zwar jeweils ein Wasserglas, und keine Mischung von Wassergläsern, eingesetzt wurden. Sämtliche eingesetzten Natriumwassergläser und Kaliumwassergläser wurden von der Wöllner GmbH, Ludwigshafen, bezogen.

In Vergleichsversuchen zur Bestimmung der Umweltverträglichkeit wurden Gele mit verschiedenen Reaktiven auf ihre Umweltverträglichkeit geprüft. Dabei wurde ein Vergleich vorgenommen zwischen Gelen, hergestellt unter Verwendung von einem auf einer Natriumaluminatlösung basierenden Reaktiv Stabisil 19, bezogen von der Wöllner GmbH, Ludwigshafen, von einem auf Natriumhydrogencarbonat basierenden Reaktiv Stabisil 23, bezogen von der Wöllner GmbH, Ludwigshafen, und einem nach dem erfindungsgemäßem Verfahren hergestellten Gel. Es wurde ein Natriumwasserglas A mit einem Molmodul von 3,46 und ein Natriumwasserglas B mit einem Molmodul von 2,58 eingesetzt. Die untersuchten Zusammensetzungen sind der nachfolgenden Tabellen 1 und 2 zu entnehmen.

**Tabelle 1**

| Reaktiv | Reaktivanteil [Gew.-%] | Wasserglas-Typ | SiO₂-Anteil [Gew.-%] | Gesamtwassergehalt [Gew.-%] |
|---|---|---|---|---|
| Stabisil 19 | 2,75 | Natriumsilikat A | 6,35 | 89,00 |
| Stabisil 23 | 2,00 | Natriumsilikat A | 6,35 | 89,75 |
| Kohlendioxid | 0,3 | Natriumsilikat A | 2,50 | 96,45 |
| Zweistufig Kohlendioxid + Propylencarbonat | 0,25 + 1,23 | Natriumsilikat A | 2,50 | 95,27 |

**Tabelle 2**

| Reaktiv | Reaktivanteil [Gew.-%] | Wasserglas-Typ | SiO₂-Antei\| [Gew.-%] | Gesamtwassergehalt [Gew.-%] |
|---|---|---|---|---|
| Stabisil 19 | 2,75 | Natriumsilikat B | 5,25 | 88,36 |
| Stabisil 23 | 2,00 | Natriumsilikat B | 5,25 | 89,11 |
| Kohlendioxid | 0,35 | Natriumsilikat B | 2,50 | 96,15 |

Entsprechend den Zusammensetzungen nach Tabelle 1 und 2 wurden Mischungen hergestellt. Aus jeweils 100 g der vorstehend genannten Mischungen wurden Gele hergestellt bei einer Temperatur zwischen 23°C und 30°C und die Probengefäße anschließend fest verschlossen für eine Woche bei dieser Temperatur gelagert. Anschließend wurde die entstandene Synärese-Flüssigkeit ausgewogen und analysiert.

Schon eine optischer Vergleich der hergestellten Gele aus den beiden Vergleichsmischungen mit Stabisil 19, welches eine Natriumaluminatlauge mit 19 Gew.-% Aluminiumoxidgehalt ist, und mit dem pulverförmigen Stabisil 23 zu dem gemäß dem erfindungsgemäßen Verfahren hergestellten Gel mit den Natriumwassergläsern A und B zeigt deutliche Unterschiede insofern, als dass letzteres erheblich heller und klarer erschien. Daraus kann geschlossen werden, dass ein feineres Netzwerk vorliegt und Silikatpartikel im Gel selbst kleiner vorliegen, wobei das mit dem Natriumwasserglas B hergestellte Gel noch etwas heller erschien, was für eine feinere und vollständigere Vernetzung spricht. Die Analyse der Synärese-Flüssigkeiten ergab nach Ermittlung der absoluten Mengen der analysierten Stoffe in dieser die folgenden, in den Tabelle 3 und 4 wiedergegebenen Werte, die auf 100g Gel bezogen sind.

**Tabelle 3**

| **Natriumwasserglas A** | | | |
|---|---|---|---|
| | Stabisil 19 | Stabisil 23 | CO₂ |
| Synärese [g] | 4,44 | 24,63 | 6,24 |
| SiO₂ [mg] | 45,7 | 125,6 | 0,6 |
| Na [mg] | 71,3 | 440,9 | 30,0 |
| Al [mg] | 0,4 | - | - |

**Tabelle 4**

| **Natriumwasserglas B** | | | |
|---|---|---|---|
| | Stabisil 19 | Stabisil 23 | CO₂ |
| Synärese [g] | 5,1 | 27,4 | 5,9 |
| SiO₂ [mg] | 60,3 | 143,5 | 0,62 |
| Na [mg] | 95,1 | 585,3 | 39,6 |
| Al [mg] | 0,5 | - | - |

Die Analyse bestätigt im Prinzip schon die optische Prüfung der erhaltenen Gele insofern, als dass die Synärese-Flüssigkeit, basierend auf des mit dem erfindungsgemäßen Verfahren hergestellten Gels, sowohl bei Natriumwasserglas A als auch Natriumwasserglas B äußerst geringe Mengen an Siliziumdioxid aufweist, was darauf hinweist, dass ein feines und nahezu vollständig vernetztes Siliziumoxid-Netzwerk im gebildeten Gel vorliegt. Insgesamt zeigt sich, dass mittels den erfindungsgemäßen Verfahren hergestellte Gele deutlich weniger Natrium und Siliziumdioxid in die Umgebung, sei es das umgebende Bodenmaterial oder das Grundwasser, und insbesondere kein Aluminium, abgegeben wird, als dies bei Gelen, die nach dem Stand der Technik mit Natriumaluminat-Lösungen oder Salzen wie Natriumhydrogencarbonat hergestellt wurden, der Fall ist. Zudem kann zusammenfassend festgehalten werden, dass der pH-Wert der im erfindungsgemäßen Verfahren eingesetzten Mischung in einem Bereich von etwa 6,5 bis etwa 9,8 und damit in einem solchen liegt, der nicht grundwasserschädlich ist und insbesondere auch nicht zu einer Übersäuerung des Bodenmaterials führen kann. Dabei war zu beobachten, dass nach 24h der pH-Wert etwas anstieg.

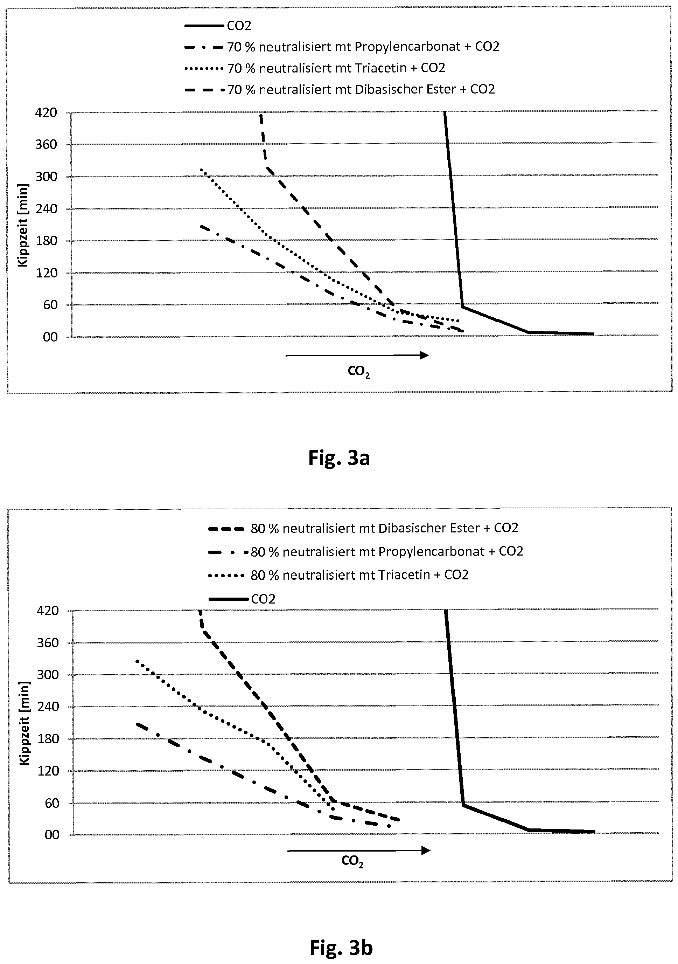

Weiterhin wurde in einem zweistufigen Verfahren in einem ersten Teilschritt eine verdünnte wässrige Lösung eines Natriumwasserglases mit einem Molmodul von etwa 3,5 und einem Siliziumdioxid-Gehalt von 2,5 Gew.-% hergestellt und in einem zweiten Teilschritt in der ersten Stufe dieses mit einem Ester in Reinform, und zwar Propylencarbonat, Triacetin und einem dibasischen Ester (DBE), auf einen Vorneutralisationsgrad von 70% beziehungsweise 80% eingestellt. Der Wassergehalt betrug 95,27 Gew.%. Zwei Minuten nach Herstellung dieser ersten Mischung wurde diese in der zweiten Stufe mit zunehmenden Mengen an gasförmigen Kohlendioxid versetzt und dabei die Kippzeiten ermittelt. Als Ester in Reinform wurden Propylencarbonat, Triacetin und ein dibasische Ester (DBE) eingesetzt. Die ermittelten Ergebnisse sind in Fig. 3a und 3b dargestellt. Deutlich zeigt sich, dass mit Propylencarbonat (untere Linie in Fig. 3a und 3b) die Kippzeit in einem für die Verarbeitung guten Zeitfenster in einem Bereich zwischen etwa 30 Minuten und etwa 200 Minuten eingestellt werden kann. Die Ergebnisse für die beiden anderen Ester sind ebenfalls gut, jedoch liegt die Kippzeit deutlich höher als bei Propylencarbonat. Zudem ergibt sich bei dem zweistufigen Verfahren eine weiter verringerte Synärese von nur 0,11 g, und es wurden nur 0,02mg Siliziumdioxid und 0,06 mg Natrium in der Synärese-Flüssigkeit festgestellt.

Mit der vorliegenden Erfindung ist somit ein erfindungsgemäßes Verfahren unter Reaktion von gasförmigem Kohlendioxid und einer wässrigen, mindestens ein Wasserglas-enthaltenden Lösung mit mindestens einem Reaktiv, welche sich zur Herstellung eines Gels, insbesondere Weichgels, insbesondere im Rahmen einer Injektion, für Abdichtungen, insbesondere in Form von Dichtsohlen oder Baugruben mit Dichtsohlen, aber auch für Teil- oder Vollabkapselungen von z.B. Deponien oder Altlasten eignet, zur Verfügung gestellt, welches sich durch eine einstellbare Kippzeit auszeichnet, so dass bevorzugt in einem kontinuierlichen Austragverfahren, insbesondere Injektionsverfahren, die Dichtsohle herstellbar ist, und zwar unter Bildung eines Gels, welches in Hinblick auf den pH-Wert verträglich in Hinblick auf Grundwasser ist und zudem aufgrund Ausbildung verbesserter Netzwerke eine gute Langzeitstabilität aufweist.

## Patentansprüche

1. Verfahren zur Herstellung einer Abdichtung in einem Bodenmaterial über eine Injektionsvorrichtung, wobei gasförmiges Kohlendioxid und eine wässrige Wasserglas-haltige Lösung mit mindestens einem Reaktiv, ausgewählt aus einer Gruppe umfassend Methylester, Ethylester und/oder Propylester der Adipinsäure, Apfelsäure, Ascorbinsäure, Zitronensäure, Essigsäure, Oxalsäure, Weinsäure sowie von Dicarbonsäuren, als auch Carbonsäureester mit Kohlenstoffketten mit 1 bis 4 Kohlenstoffatomen und Dicarbonsäureester mit Kohlenstoffketten mit 1 bis 6 Kohlenstoffatomen, Triglyceride, cyclische Carbonsäureester, Propylencarbonat, Triacetin oder dibasische Ester, zu einer Reaktion unter Bildung eines Gels gebracht werden.

2. Verfahren gemäß Anspruch 1, **dadurch gekennzeichnet, dass** eine Einleitung gasförmigen Kohlendioxids in die wässrige Wasserglas-haltige Lösung vor der und/oder in der Injektionsvorrichtung erfolgt.

3. Verfahren gemäß einem oder mehreren der vorhergehenden Ansprüche, **dadurch gekennzeichnet, dass** der pH-Wert der Mischung in einem Bereich von etwa 6,5 bis etwa 10,5 eingestellt wird.

4. Verfahren gemäß einem oder mehreren der vorhergehenden Ansprüche, **dadurch gekennzeichnet, dass** das in der wässrigen Lösung enthaltene mindestens eine Wasserglas ein Molmodul in einem Bereich von etwa 2,5 bis etwa 4,0 aufweist.

5. Verfahren gemäß einem oder mehreren der vorhergehenden Ansprüche, **dadurch gekennzeichnet, dass** das in der wässrigen Lösung enthaltene mindestens eine Wasserglas einen Siliziumdioxid-Gehalt von etwa 0,5 Gew.-% bis etwa 5 Gew.-%, bezogen auf die Gesamtmenge der wässrigen Lösung, aufweist.

6. Verfahren gemäß einem oder mehreren der vorhergehenden Ansprüche, **dadurch gekennzeichnet, dass** ein Feststoffgehalt des mindestens einen Wasserglases in wässriger Lösung etwa 1 Gew.-% bis etwa 6 Gew.-%, bezogen auf die Gesamtmenge der wässrigen Lösung, beträgt.

7. Verfahren gemäß einem oder mehreren der vorhergehenden Ansprüche, **dadurch gekennzeichnet, dass** die Einleitung von gasförmigem Kohlendioxid in die wässrige Wasserglas-haltige Lösung kontinuierlich erfolgt.

8. Verfahren gemäß einem oder mehreren der vorhergehenden Ansprüche, **dadurch gekennzeichnet, dass** die Einleitung von gasförmigem Kohlendioxid in die wässrige Wasserglas-haltige Lösung lateral, über eine Ringspaltdüse und/oder im Gegenstrom erfolgt.

9. Verfahren gemäß einem oder mehreren der vorhergehenden Ansprüche, **dadurch gekennzeichnet, dass** die wässrige Wasserglas-haltige Lösung durch mindestens ein Pumpmittel verdichtet wird.

10. Verwendung von gasförmigem Kohlendioxid als Reaktiv zur Herstellung einer Abdichtung aus einer wässrigen Wasserglas-haltigen Lösung gemäß einem oder mehreren der vorhergehenden Ansprüche durch Injektion in einem Bodenmaterial.

11. Verwendung gemäß Anspruch 10, **dadurch gekennzeichnet, dass** eine Mischung des gasförmigen Kohlendioxids und einer wässrigen Wasserglas-haltigen Lösung in ein Bodenmaterial injiziert wird.

## Claims

1. Method for producing a sealing in a ground material by means of an injection device, wherein gaseous carbon dioxide and an aqueous waterglass-containing solution having at least one reactive agent, selected from a group comprising methyl ester, ethyl ester and/or propyl ester of adipic acid, malic acid, ascorbic acid, citric acid, acetic acid, oxalic acid, tartaric acid, and dicarboxylic acids, as well as carboxylic acid esters with carbon chains with 1 to 4 carbon atoms and dicarboxylic acid esters with carbon chains with 1 to 6 carbon atoms, triglycerides, cyclic carboxylic acid esters, propylene carbonate, triacetin or dibasic esters, are brought to react, whereby forming a gel.

2. Method according to claim 1, **characterized in that** an introduction of gaseous carbon dioxide into the aqueous waterglass-containing solution is carried out before and/or in the injection device.

3. Method according to one or more of the preceding claims, **characterized in that** the pH of the mixture is adjusted in a range from about 6.5 to about 10.5.

4. Method according to one or more of the preceding claims, **characterized in that** the at least one water glass contained in the aqueous solution has a molar module in a range of about 2.5 to about 4.0.

5. Method according to one or more of the preceding claims, **characterized in that** the at least one water glass contained in the aqueous solution has a silicon dioxide content of about 0.5% to about 5% by weight, based on the total amount of the aqueous solution.

6. Method according to one or more of the preceding claims, **characterized in that** a solids content of the at least one water glass in aqueous solution is about 1% to about 6% by weight, based on the total amount of the aqueous solution.

7. Method according to one or more of the preceding claims, **characterized in that** the introduction of gaseous carbon dioxide into the aqueous waterglass-containing solution is carried out continuously.

8. Process according to one or more of the preceding claims, **characterized in that** the introduction of gaseous carbon dioxide into the aqueous waterglass-containing solution takes place laterally, via an annular gap nozzle and/or in counterflow.

9. Method according to one or more of the preceding claims, **characterized in that** the aqueous waterglass-containing solution is compacted by means of at least one pumping agent.

10. Use of gaseous carbon dioxide as reactive for producing a sealing from an aqueous waterglass-containing solution according to one or more of the preceding claims by injection into a ground material.

11. Use according to claim 10, **characterized in that** a mixture of the gaseous carbon dioxide and an aqueous waterglass-containing solution is injected into a ground material.

## Revendications

1. Procédé de production d'un scellement dans un matériau de sol à l'aide d'un dispositif d'injection, selon lequel du dioxyde de carbone sous forme gazeuse et une solution aqueuse de verre soluble sont mis en réaction avec un réactif sélectionné parmi un groupe comprenant les esters méthyliques, les esters éthyliques et/ou les esters propyliques d'acide adipique, d'acide malique, d'acide ascorbique, d'acide citrique, d'acide acétique, d'acide oxalique, d'acide tartrique ainsi que d'acides dicarboxyliques, ainsi que l'ester d'acide carboxylique avec des chaînes carbonées comprenant de 1 à 4 atomes de carbone et l'ester dicarboxylique avec des chaînes carbonées comprenant de 1 à 6 atomes de carbone, les triglycérides, les esters d'acide carboxylique cycliques, le carbonate de propylène, la triacétine ou les esters dibasiques et forment un gel.

2. Procédé selon la revendication 1, **caractérisé en ce qu'**une injection de dioxyde de carbone sous forme gazeuse dans la solution aqueuse de verre soluble est effectuée en amont et/ou dans le dispositif d'injection.

3. Procédé selon une ou plusieurs des revendications précédentes, **caractérisé en ce que** la valeur pH du mélange est réglée sur une plage d'environ 6,5 à environ 10,5.

4. Procédé selon une ou plusieurs des revendications précédentes, **caractérisé en ce que** l'au moins verre soluble contenu dans la solution aqueuse possède un module molaire situé sur une plage d'environ 2,5 à environ 4,0.

5. Procédé selon une ou plusieurs des revendications précédentes, **caractérisé en ce que** l'au moins un verre soluble contenu dans la solution aqueuse possède une teneur en dioxyde de silicium d'environ 0,5% en poids à environ 5% en poids par rapport à la quantité totale de solution aqueuse.

6. Procédé selon une ou plusieurs des revendications précédentes, **caractérisé en ce qu'**une teneur en matières solides de l'au moins un verre soluble contenu dans la solution aqueuse est d'environ 1% en poids à environ 6% en poids par rapport à la quantité totale de solution aqueuse.

7. Procédé selon une ou plusieurs des revendications précédentes, **caractérisé en ce que** l'injection de dioxyde de carbone sous forme gazeuse dans la solution aqueuse de verre soluble se fait en continu.

8. Procédé selon une ou plusieurs des revendications précédentes, **caractérisé en ce que** l'injection de dioxyde de carbone sous forme gazeuse dans la solution aqueuse de verre soluble se fait latéralement à l'aide d'une buse à fente annulaire et/ou à contre-courant.

9. Procédé selon une ou plusieurs des revendications précédentes, **caractérisé en ce que** la solution aqueuse de verre soluble est comprimée par au moins un moyen de pompage.

10. Utilisation de dioxyde de carbone sous forme gazeuse comme réactif pour produire un scellement à partir d'une solution aqueuse de verre soluble selon une ou plusieurs des revendications précédentes par injection dans un matériau de sol.

11. Utilisation selon la revendication 10, **caractérisée en ce qu'**un mélange du dioxyde de carbone sous forme gazeuse et d'une solution aqueuse de verre soluble est injecté dans un matériau de sol.
